(19) Europäisches Patentamt
European Patent Office
Office européen des brevets

(11) **EP 4 113 381 A1**

(12) **EUROPEAN PATENT APPLICATION**

(43) Date of publication:
**04.01.2023 Bulletin 2023/01**

(51) International Patent Classification (IPC):
**G06N 3/04** *(2006.01)*    **G06N 3/08** *(2006.01)*

(21) Application number: **21218428.7**

(52) Cooperative Patent Classification (CPC):
**G06N 3/0454**; G06N 3/084

(22) Date of filing: **31.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2021 TR 202110542**

(71) Applicant: **Yasar Universitesi
35100 Bornova/Izmir (TR)**

(72) Inventors:
• **RODOPLU, Volkan**
  IZMIR (TR)
• **NAKIP, Mert**
  IZMIR (TR)
• **KARAKAYALI, Kubilay**
  IZMIR (TR)
• **GUZELIS, Cuneyt**
  IZMIR (TR)

(74) Representative: **Yalçiner Patent and Consulting Ltd.
Tunus Caddesi 85/3-4
Kavaklidere
Ankara (TR)**

(54) **AN END-TO-END TRAINABLE FEATURE SELECTION-FORECASTING ARCHITECTURE FOR INTERNET OF THINGS TRAFFIC FORECASTING TO ACHIEVE PREDICTIVE QUALITY OF SERVICE ROUTING IN SOFTWARE-DEFINED NETWORKS**

(57)    The subject of invention is related to a method which develops a novel feature selection-forecasting architecture, called FSF, that is able to perform automatic, dynamic selection of features in order to minimize the forecasting error in IoT traffic forecasting for predictive Quality of Service (QoS) routing in Software-Defined Networks (SDNs). By minimizing the forecasting error, the FSF architecture allows higher quality IoT traffic predictions that improve the QoS in routing on SDNs.

End-to-End Trainable Feature Selection - Forecasting Architecture

**Figure 1**

**Description**

**TECHNICAL FIELD**

The subject of invention is related to a method which develops a novel feature selection-forecasting architecture, called FSF, that is able to perform automatic, dynamic selection of features in order to minimize the forecasting error in IoT traffic forecasting for predictive Quality of Service (QoS) routing in Software-Defined Networks (SDNs). By minimizing the forecasting error, the FSF architecture allows higher quality IoT traffic predictions that improve the QoS in routing on SDNs.

**PRIOR ART**

In this section, we contrast this invention with the state of the art in four categories: (1) Deep Learning (DL) forecasting techniques as well as statistical models, none of which use feature selection [1, 2]. (2) Machine learning (ML) techniques that utilize feature selection [3]. (3) Recent schemes on forecasting the traffic generation patterns of IoT devices [4, 5, 6, 7]. (4) QoS routing and channel allocation schemes in SDNs [8, 9].

In regard to the first category, in the current forecasting literature, both deep neural networks and statistical models are used for forecasting without feature selection. We shall first address DL techniques and then turn to the comparison with statistical models. The architectural designs of DL techniques, such as LSTM and 1D CNN [1, 2] , are able to perform internal feature extraction in order to minimize the forecasting error: LSTM is used for short-term forecasting of the electric load [1]. Moreover, a hybrid of 1D CNN and LSTM is used for forecasting Particulate Matter concentration in smart cities [2]. The results of the works show that DL techniques are able to achieve relatively high performance for each of these distinct forecasting problems. However, these techniques need data sets with a relatively high number of samples because of their complex internal architectures. In contrast, this invention FSF is able to reach higher performance than these DL techniques on smaller data sets since the internal architecture of FSF is composed of simpler operations than those of the DL techniques.

Now, we address the differences between statistical forecasting models and invention. Statistical models such as ARIMA and Seasonal ARIMA (SARIMA) capture the linear relationship among the future, current, and the past values of a time series, if such an underlying relationship exists in the data. Such models are able to achieve high performance for data that have a linear underlying structure. In contrast with ARIMA and SARIMA, our FSF architecture is able to capture both linear and nonlinear relationships due to the flexibility inherent in our architecture.

In regard to the second category, we shall first address the difference between this invention and non-adaptive (also known as filter-based) feature selection techniques. The articles in this subcategory select the relevant features with respect to feature importance scores. Tradiationally, the feature importance scores are based mostly on statistical functions, such as the Autocorrelation Function (ACF) or the partial ACF with a correlation threshold. In the same subcategory of filter-based methods, the following articles calculate the feature importance scores by using ML or fuzzy logic. In the filter-based feature selection methods, typically, a fixed (that is, untrainable) threshold value or a policy is applied on the importance scores in order to select the relevant features. In contrast, our FSF architecture trains a neural network based on *trainable* feature importance scores and a *trainable* value of the threshold.

Now, we turn to the second subcategory of feature selection techniques, namely adaptive feature selection, which is comprised of wrapper-based feature selection and embedded feature selection methods. We shall first contrast invention against wrapper-based feature selection methods for forecasting in the literature. These feature selection methods minimize the forecasting error iteratively. Reference [3] combines ant colony optimization and a genetic algorithm to select features in order to forecast the 24-hours-ahead electricity load using an MLP. In contrast with such past wrapper-based feature selection methods, our FSF architecture selects the important features by minimizing the forecasting error via backpropagation in the place of performing a search for those features.

Within the second subcategory of adaptive feature selection methods for forecasting, embedded feature selection methods minimize the forecasting error by performing weighted or standard feature selection during the training of the model. Although the works in this subcategory select features during the training of the forecaster, some parameters of these methods have to be set before training. In contrast with past embedded feature selection methods for forecasting, all of the parameters in the design of our FSF architecture are trainable. Furthermore, our architecture can be combined and trained with any forecasting model via backpropagation.

In the third category, we describe the relationship of invention to the past work on forecasting the traffic generation patterns of IoT devices, which is the immediate application domain of our FSF architecture. Forecasting the traffic generation patterns of individual IoT devices was proposed in [4]. In that work, the authors demonstrated the performance of MLP, LSTM, 1D CNN and ARIMA using feature selection that is based on ACF, embedding dimension as well as Analysis of Variance (ANOVA). Furthermore, Reference [5] used MLP, LSTM, and ARIMA, and References [6] and [7] used MLP using ACF-based feature selection for forecasting the traffic generation pattern of an IoT device. In contrast with these past articles that are based on existing feature selection methodologies for forecasting IoT traffic, in this invention, we propose a novel architecture for forecasting IoT traffic generation patterns, which combines dynamic, automatic feature selection and forecasting.

In the fourth category, we describe the relationship of this invention to QoS routing methods for SDNs in the past. Most of the past methods for QoS routing in SDNs, such as [8], do not use IoT traffic forecasting. While certain references, such as [9], forecast future network traffic congestion and assigns channels in an SDN-IoT network based on forecasts, these references do not address the problem of QoS routing in SDNs.

**BRIEF DESCRIPTION OF THE INVENTION**

The present invention relates to a method that overcomes the above mentioned disadvantages. This invention has been developed as an outcome of Marie Sklodowska-Curie grant agreement No. 846077 under the H2020 research and innovation program of the European Commission.

In this invention, a novel end-to-end trainable feature selection-forecasting (FSF) architecture for predictive networks targeted at the Internet of Things (IoT) is developed. In contrast with the existing filter-based, wrapper-based and embedded feature selection methods, this invented architecture enables the automatic selection of features dynamically based on feature importance score calculation and gamma-gated feature selection units that are trained jointly and end-to-end with the forecaster. We compare the performance of our FSF architecture on the problem of forecasting IoT device traffic against the following existing (feature selection, forecasting) technique pairs: Autocorrelation Function (ACF), Analysis of Variance (ANOVA), Recurrent Feature Elimination (RFE) and Ridge Regression methods for feature selection, and Linear Regression, Multi-Layer Perceptron (MLP), Long Short Term Memory (LSTM), 1 Dimensional Convolutional Neural Network (ID CNN), Autoregressive Integrated Moving Average (ARIMA), and Logistic Regression for forecasting. We show that our FSF architecture achieves either the best or close to the best performance among all of the competing techniques by virtue of its dynamic, automatic feature selection capability. In addition, we demonstrate that both the training time and the execution time of FSF are reasonable for IoT applications. This work represents a milestone for the development of predictive networks for IoT in smart cities of the near future.

Smart cities of the near future will be made up of smart buildings, factories, hospitals, transportation services, schools as well as smart homes, all of which will be at the disposal of the digitally-equipped inhabitants of these cities. The Internet of Things (IoT), which refers to a plethora of sensors dispersed in a smart city, is expected to become the main enabler of the services that the smart city will offer. The sensors that make up the IoT infrastructure will report their data via a telecommunication infrastructure network to the cloud that runs Artificial Intelligence (AI) algorithms that interpret and act upon the data reported by the sensors.

Predictive networking is a new paradigm in which the telecommunication infrastructure network itself uses AI-based algorithms to form predictions of the demand upon the network in order to allocate networking resources in advance. Predictive networks stand in sharp contrast with the traditional reactive networks that merely respond to the current demand. It is expected that the development of accurate forecasting schemes will play a crucial role for realizing predictive networks in smart cities of the near future .

The goal of this invention is to develop a general architecture for forecasting that is targeted at forecasting IoT data traffic for predictive QoS routing in SDNs. The forecasting architecture that we develop in this invention stands at a point between Deep Learning (DL) techniques at one end and the rest of the Machine Learning (ML) techniques at the other end of the spectrum. A key difference between these two classes of techniques is in regard to "features", namely, aspects of the past data that are singled out as being important for forming accurate forecasts: A DL technique discovers the features itself but typically requires a long past data stream and a high training time. In contrast, an ML technique that does not use DL typically utilizes "feature selection", namely a selection among or a transformation of the past data such that only these features (not the entire past data) are fed as input to the forecaster.

The feature selection-forecasting architecture that we develop in this invention, which we abbreviate as FSF, enables automatic discovery of features in order to minimize the forecasting error while retaining reasonable space and time complexity. The key differences between our FSF architecture and the existing literature are as follows:

- The fact that unimportant features are strictly eliminated in FSF distinguishes our approach from DL techniques.
- The fact that feature discovery is completely automated in FSF contrasts sharply with the existing categories of filter-based, wrapper-based and embedded feature selection techniques in the literature. Our architecture falls in none of these existing categories.
- Our FSF architecture is *not* a simple combination of feature selection and forecasting methods. Instead, it is a general architecture that dynamically selects features based on the computed feature importance scores and performs forecasting based only on the selected features.

An artificial neural network (ANN) is said to be "end-to-end trainable" if all of the parameters of the ANN between the input and output terminals are trainable. We achieve the dynamic, automatic feature selection in our FSF architecture by training both the feature selection and forecasting modules jointly as an end-to-end trainable ANN. In this invention, we demonstrate that our architecture offers a high generalization ability that produces highly accurate forecasts.

We compare the performance of our FSF architecture on the problem of forecasting IoT device traffic against a competitive subset of existing (feature selection, forecasting) pairs and show that our FSF architecture achieves either the best or close to the best performance by virtue of its dynamic, automatic feature selection capability. In addition, we demonstrate that both the training time and the execution time of FSF are reasonable for IoT applications.

**BRIEF DESCRIPTION of FIGURES**

For a better understanding of the invention, the figures prepared are explained below.

Figure 1: End-to-end trainable Feature Selection-Forecasting architecture (FSF), which is comprised of the Feature Importance Score Calculation (FISC), Gamma-Gated Feature Selection (GG-FS) and Forecasting modules
Figure 2: Inner architecture of the Feature Importance Score Calculation (FISC) module
Figure 3: Inner architecture of the Gamma-Gated Feature Selection (GG-FS) module
Figure 4: Gamma-Gated Feature Selection (GG-FS) Unit
Figure 5: Comparison of FSF-MLP and FSF-LSTM against existing models with respect to the average ½-sMAPE over the values of $K$ for (a) RH, (b) LDR, and (c) Water Level data sets, each of which falls in the VBP class
Figure 6: Comparison of FSF-MLP and FSF-LSTM against existing models with respect to the average ½-sMAPE over the values of $K$ for (a) $NO_2$, (b) Temperature, and (c) Elevator Button data sets, each of which falls in the VBA class
Figure 7: Comparison of FSF-MLP and FSF-LSTM with existing models with respect to average ½-sMAPE over the values of $K$ for the (a) NMHC, (b) Wind Speed, and the (c) Smart Home Energy Generation data sets that fall in the FBA class.
Figure 8: coefficient of distinct schemesas a function of the sample lag for the RH data set, which falls in te VBP class (a) feature importance socores of FSF-MLP, (b) autuocorrelation function (ACF), (c) ANOVA Coefficient, (d) Linear Regression Coefficients
Figure 9: Training time of the forecasting models on each data set in the following device classes: (a) VBP, (b) VBA, (c) FBA
Figure 10: Execution time per sample of the forecasting models on each data set in the following device classes: (a) VBP, (b) VBA, (c) FBA

**DETAILED EXPLANATION OF INVENTION**

In this detailed description, the innovation subject to the invention is explained with examples that are not limited to this, is just given for better understanding of the subject.

A novel end-to-end trainable feature selection-forecasting (FSF) architecture for predictive networks targeted at the Internet of Things (IoT) is developed.

Table 1: List of Symbols

| Symbol | Meaning |
|---|---|
| $x_t$ | Number of bits of traffic generated by an IoT device at current time t |
| $\hat{x}_{t+k}$ | $k^{th}$-step ahead forecast at current time t |
| $s_{t,l}^m$ | Feature importance score that corresponds to $x_{t-l}$ at iteration m |
| $\gamma^m$ | Value of the feature selection threshold at iteration m |
| $\tilde{x}_{t-l}^m$ | The $l^{th}$ past traffic generation sample for iteration $m$ at current time t after the application of feature selection |
| $L$ | Number of samples into the past used by the FSF architecture |
| $K$ | Total number of steps into the future for which forecasts are formed |
| $E$ | Total number of MLP layers |
| $n_e$ | Number of neurons at layer e of the MLP |
| $E_{LSTM}$ | Number of fully connected layers of LSTM |

(continued)

| Symbol | Meaning |
|---|---|
| $h_e$ | Number of neurons at fully connected layer eof LSTM |
| $h_{LSTM}$ | Total number of LSTM units |
| $C_{CNN}$ | Number of filters in the convolution layer of 1D CNN |
| $c_e$ | Number of neurons in the fully connected layer e of 1D CNN |
| $p$ | Order of observation lags in ARIMA |
| $q$ | Number of samples that fall in one Moving Average (MA) window for ARIMA |
| $r$ | Order of differencing for ARIMA |

## End-to-End Trainable Feature Selection-Forecasting Architecture

In this section, we describe the invention, namely, the end-to-end trainable feature selection-forecasting architecture FSF. Since our immediate application domain is that of forecasting the traffic generation pattern of an IoT device, we shall refer to the time series data as the "traffic generation pattern" of an IoT device in defining all of our variables. Table 1 gives the list of the mathematical symbols that we use in the order in which they appear in this invention.

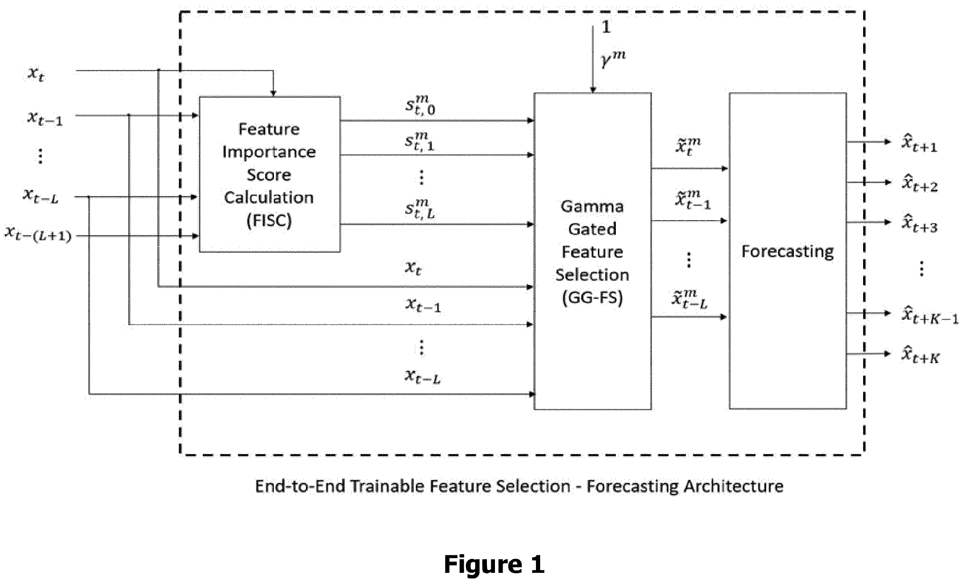

FSF architecture is shown in Figure 1. We let $\{x_t\}$ denote the traffic generation pattern of an individual IoT device, where t denotes the discrete time index.[1] As shown in the figure, the input of our FSF architecture is the subset of the past samples, denoted by $\{x_{t-l}\}_{l\in\{0,...,L+1\}}$, at current time t. The output of architecture, denoted by $\{\hat{x}_{t+k}\}_{k\in\{1,...,K\}}$, is the set of forecasts at current time t over the next $K$ samples.

[1] In practice, an IoT device typically generates traffic at multiples of a traffic generation period for that device; hence, we use a discrete time index t in order to refer to those instances at which the IoT device can potentially generate traffic. Note that this choice also allows the case in which the IoT device may generate zero traffic at a subset of these discrete-time instances.

As shown in Figure 1, FSF architecture is comprised of three modules: Feature Importance Score Calculation (FISC) module, Gamma-Gated Feature Selection (GG-FS) module, and the Forecasting module. The relationship between the operations of these modules is as follows:

    a. FISC Module: The FISC module transforms the input vector of the past data into a vector of importance scores. The output of the FISC module is fed into the GG-FS module (as shown in Figure 1).
    b. GG-FS Module: The GG-FS module compares these importance scores against a threshold in order to determine dynamically which elements of the input vector will be selected as features to be passed onto the Forecasting module. The output of the GG-FS module is fed into the Forecasting module (as shown in Figure 1).
    c. Forecasting Module: The Forecasting module performs forecasting based on these selected features.

The key novelty in our design is that *all* of the parameters in FSF architecture are trainable end-to-end via backpropagation. Backpropagation completes a forward and a backward pass through the entire FSF architecture in Figure 1 in each iteration while updating the values of all of the parameters. Throughout this invention, the iteration index m shall appear as a superscript on each of the parameters of our architecture. For example, in Figure 1, the input to the GG-FS module, labeled as $\gamma^m$, denotes the value of the threshold parameter at iteration m of the backpropagation through the FSF architecture.

We now describe the operation of the modules of our FSF architecture in Figure 1.

    a. FISC Module: First, the FISC module computes the importance score for each of the elements of the input vector by measuring the pairwise relationship between the current input $x_t$ and each of the past inputs $x_{t-l}$, $\forall l \in \{1, ..., L +$

    1\}. In the figure, $S_{t,l}^m$ is the importance score for $x_{t-l}$ at iteration m; it measures the importance of $x_{t-l}$ in minimizing the forecasting error at the output of the FSF architecture.[2]

[2] The reason that the outputs of the FISC module are correctly interpreted as importance scores is that only a selected subset of these scores, which are deemed important, will be passed onto the Forecasting module by the GG-FS module. The operation of the GG-FS module will be described shortly.

    b. GG-FS Module: Second, each of the features $x_{t-l}$ and the corresponding feature importance score $S_{t,l}^m$ of that feature is passed onto the GG-FS module. The GG-FS module passes only the selected features $\{\tilde{x}_{t-l}^m\}_{l \in \{0,...L\}}$ to the Forecasting module, where the values of the features that have *not* been selected are set to zero.[3]

[3] One must keep in mind that our FSF architecture selects features dynamically. Hence, at the end of training, after all of the parameters of the entire architecture have converged, the FISC module computes the importance scores dynamically. Hence, the particular features that are selected by GG-FS are also determined dynamically.

c. Forecasting Module: Third, the Forecasting module performs K-step ahead forecasting. Any forecasting architecture with trainable parameters can be used for this Forecasting module. The parameters of the Forecasting module are trained jointly with the parameters of the FISC and GG-FS modules in our FSF architecture.

We shall now delve into the inner architecture of each of the FISC, GG-FS and Forecasting modules of FSF.

## a. Feature Importance Score Calculation (FISC) Module

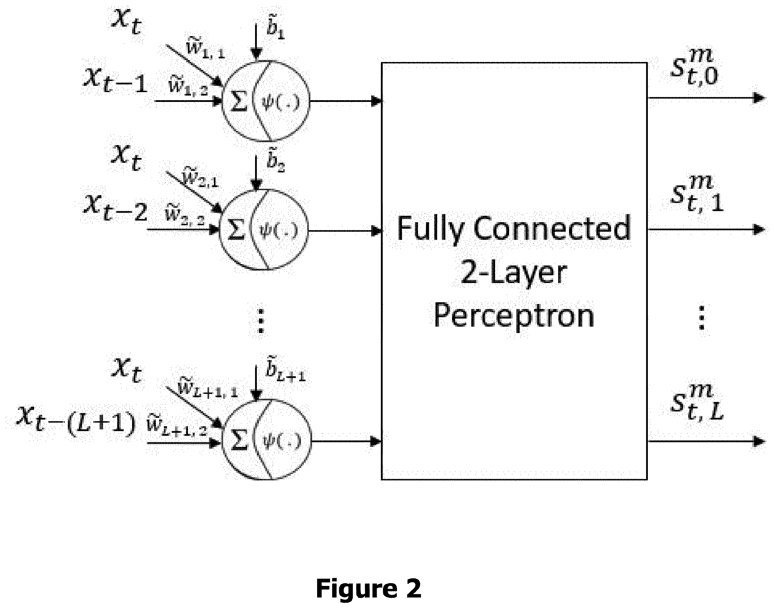

The inner architecture of the FISC module is given in Figure 2. In the first layer of the FISC module (which is the left-most layer in the figure), which we shall call the "customized layer", the *l*th neuron learns the relationship between $x_t$ and $x_{t-l}$, where $l \in \{1,..., L + 1\}$. The remainder of the FISC module is a fully connected 2-layer perceptron as shown in the figure.[4]

[4] For the FISC module, in the place of a 3-layer perceptron, which would be a general ANN architecture, we have chosen an architecture that possesses a customized design for the first layer in order to circumvent the greater number of local optima that would result if a fully-connected 3-layer design were used.

For each layer of the FISC, we set the number of neurons equal to the number of input pairs, which is $L + 1$. We represent the importance scores in the range (0,1). To this end, we set the activation function of each neuron in the last (i.e. output) layer of FISC to the unipolar sigmoid function. We also set the activation function of each neuron in the customized layer as well as the first layer of the fully-connected 2-layer perceptron to the tangent hyperbolic (*tanh*) function. Furthermore, each of the connection weights and the biases $\{(\tilde{w}_{l,1}, \tilde{w}_{l,2}, \tilde{b}_l)\}_{l \in \{1,...,L+1\}}$ is initialized as the realization of a uniform random variable on the interval [0,1]. Note that the training of FISC is performed during the training of the entire FSF architecture; that is, this module is *not* trained in a stand-alone fashion.

## b. Gamma-Gated Feature Selection (GG-FS) Module

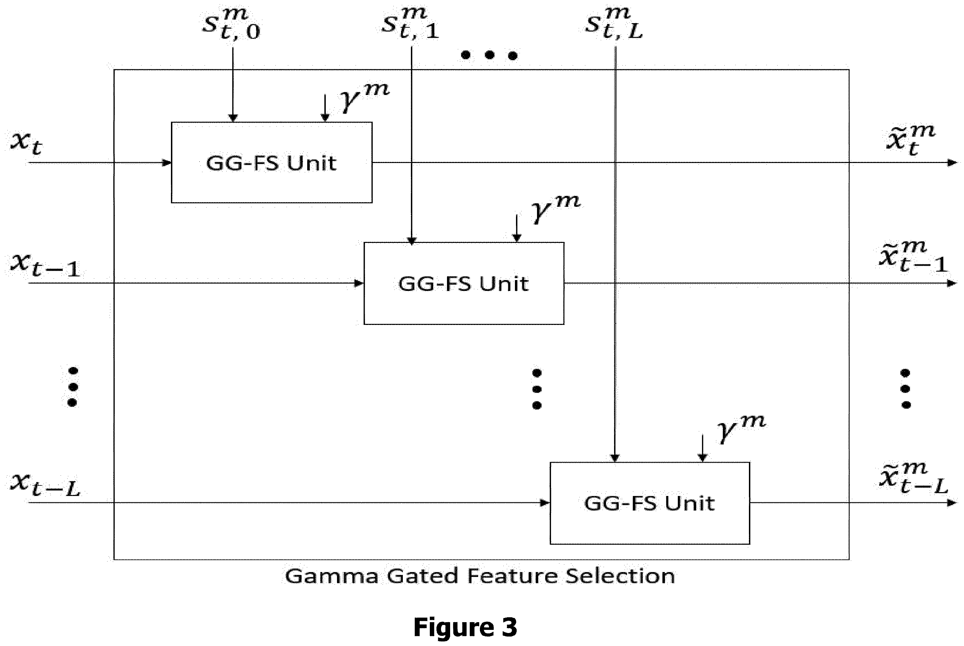

In Figure 3, we display the inner architecture of the GG-FS module. This module has two input vectors, which are (1) the data points of the time series $\{x_{t-l}\}_{l \in \{0,...,L\}}$ and (2) the feature importance scores $\{s_{t,l}^m\}_{l \in \{0,...,L\}}$, which are the outputs of the FISC module.

As shown in Figure 3, at iteration m, for each value of *l*, the GG-FS module computes the value of $\tilde{x}_{t-l}^m$ by using $x_{t-l}$, $s_{t,l}^m$ in the *l*th GG-FS Unit as well as the trainable parameter $\gamma^m$, which is common to *all* of the GG-FS units. That is, there is only a single trainable threshold parameter $\gamma^m$ for the entire FSF architecture.[5]

[5] Recall that the value of $\gamma^m$ is updated by using backpropagation across the *entire* FSF architecture at each training iteration *m*.

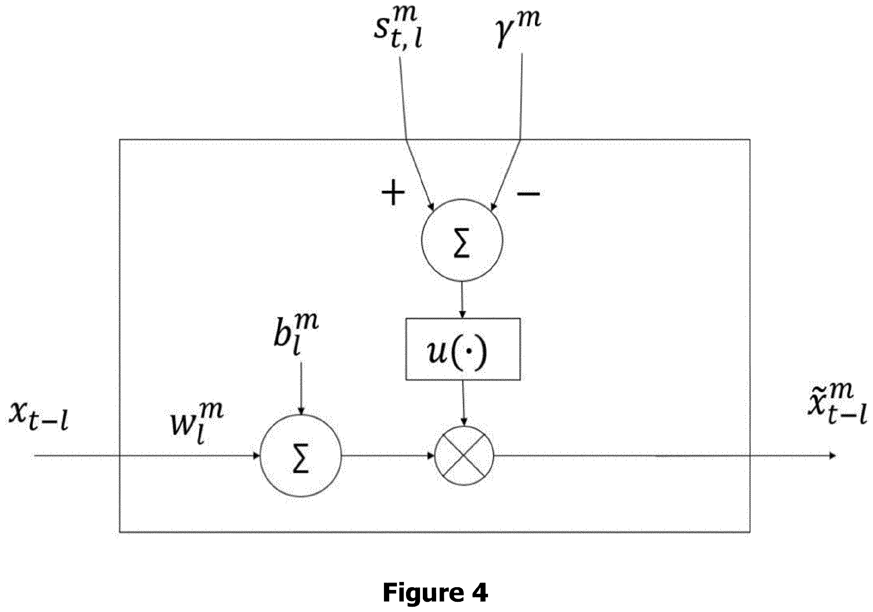

Figure 4 displays the inner architecture of a GG-FS Unit. In this figure, $x_{t-l}$ and $s_{t,l}^m$ are the inputs, and $\tilde{x}_{t-l}^m$ is the output. In this figure, $\otimes$ denotes ordinary multiplication, and $u(\cdot)$ denotes the unit step function which outputs 0 if its argument is negative and outputs 1 otherwise. If $s_{t,l}^m < \gamma^m$, $x_{t-l}$ is not selected as a feature. In this case, $\tilde{x}_{t-l}^m$ is set to 0. If $s_{t,l}^m \geq \gamma^m$, then $x_{t-l}$ is selected as a feature. In this case, the GG-FS Unit multiplies $x_{t-l}$ by the connection weight $w_l^m$ and adds the bias term $b_l^m$ and obtains $\tilde{x}_{t-l}^m$; that is, in the case that $x_{t-l}$ is selected as a feature, it is transformed into $\tilde{x}_{t-l}^m$ via a single linear neuron.

Now, it is important to keep in mind that in order for the entire FSF architecture to be end-to-end trainable via backpropagation, all of the functions in the FSF architecture must be differentiable. Since the unit step function $u(\cdot)$ is not a differentiable function, we implement a differentiable approximation to the unit step function as $u(x) \approx 1/(1 + e^{-\alpha x})$,

which is a sigmoid function with steepness parameter $\alpha$. In our implementation, we set $\alpha = 10$. Recall that $S_{t,l}^m$ is a real number in the range (0,1). Note that if $\gamma^m \geq 1$, then none of the features will be selected by the GG-FS module. Conversely, if $\gamma^m \leq 0$, then all of the features will be selected. In order to prevent the FSF architecture from getting stuck at selecting none or all of the features, we restrict the value of $\gamma^m$ such that it lies between 0 and 1.

**c. Forecasting Module**

Any forecasting scheme can used as the Forecasting module of the FSF architecture in Figure 2. The only criterion for the selection of a forecasting scheme is that the forecasting scheme be trainable by using backpropagation. This is a necessary condition in order to retain the end-to-end trainability of the entire FSF architecture. In Section 4, we examine the performance of the FSF architecture under the MLP and LSTM forecasting schemes.

As shown in Figure 2, at each iteration m, the input to the Forecasting module is the vector of selected features $\{\tilde{x}_{t-l}^m\}_{l \in \{0,...,L\}}$, and the output of the Forecasting module is the vector of 1- to K-step ahead forecasts $\{\hat{x}_{t+k}\}_{k \in \{1,...,K\}}$.

**Number of Trainable Parameters for Feature Selection in the FISC and GG-FS Modules of the FSF Architecture**

We now compute the order of the number of trainable parameters in the FISC and GG-FS modules of the FSF architecture, which carry out feature selection.[6] To this end, first, we note that there are $L + 1$ neurons at each layer of the FISC module in Figure 1. Since the first layer is not a fully connected layer and there are only three parameters (namely two connection weights and one bias parameter) for each neuron, the total number of parameters in the first layer of FISC is equal to $3(L + 1)$. In addition, the rest of the FISC module is comprised of two fully connected layers, each of which consists of $L + 1$ neurons; hence, there are $2(L + 1)$ bias parameters for these layers. The number of connection weights across all of the layers of FISC is $2(L + 1)^2$. Thus, the total number of parameters in FISC is $2L^2 + 9L + 7$. Furthermore, since there are $L + 1$ GG-FS Units in the GG-FS module, and there are only two parameters in each GG-FS Unit, the total number of parameters in the GG-FS module is $2(L + 1)$. In addition, the parameter $\gamma^m$ is an input to the GG-FS module. Hence, the total number of parameters for the GG-FS module is $2L + 3$. As a result, the total number of parameters in the FISC and the GG-FS modules is $2L^2 + 11L + 10$. Hence, the total number of parameters for the FISC and the GG-FS modules is $\mathcal{O}(L^2)$.

[6] We calculate the number of parameters excluding those in the Forecasting module because the number of parameters in the Forecasting module depends on the particular forecasting scheme.

**Results**

In this section, by using either an MLP or an LSTM forecaster in the FSF architecture in Figure 2, we aim to compare the forecasting performance of our FSF architecture against the performance obtained by a selected subset of the following (feature selection, forecaster) pairs: Autocorrelation Function (ACF), Analysis of Variance (ANOVA), Recurrent Feature Elimination (RFE) and Ridge Regression for feature selection, and Linear Regression, Multi-Layer Perceptron (MLP), Long Short Term Memory (LSTM), 1 Dimensional Convolutional Neural Network (1D CNN), Autoregressive Integrated Moving Average (ARIMA), and Logistic Regression for forecasting. [7]

[7] In order to compare the performance of the FSF architecture against that of representative (feature selection, forecaster) pairs, we have selected ACF-based and ANOVA-based feature selection as representatives of filter-based, RFE as a representative of wrapper-based, and Ridge Regression as a representative of embedded feature selection methods.

To this end, in this section, we first present the collection and processing methodology for IoT traffic data sets on which we have obtained our results. Second, we present the methodology

for competing feature selection methods and for tuning the hyperparameters of competing forecasting models. Third, we describe the 10-fold cross-validation method for the performance evaluation of all of the forecasting models under examination. Fourth, we present the results on the forecasting performance as well as the training and execution times.

**Collection and Processing Methodology for Internet of Things Traffic Data Sets**

The traffic generation patterns of individual IoT devices were classified into four distinct classes as follows: First, if the IoT device generates only a constant number of bits, its traffic generation pattern is said to be "Fixed Bit"; otherwise, it is "Variable Bit". Furthermore, if the generation intervals of the traffic of the IoT device are constant, its traffic is called "Periodic"; otherwise, it is called "Aperiodic". According to this classification, the traffic generation of an individual IoT device falls in one of the four classes: (1) Fixed Bit Periodic (FBP), (2) Fixed Bit Aperiodic (FBA), (3) Variable Bit Periodic (VBP), and Variable Bit Aperiodic (VBA). Since both the number of bits and the generation interval for the FBP class are known in advance, forecasting is required only for the traffic generation patterns in the VBP, VBA and the FBA classes. In this invention, we present our results on the traffic generation patterns of three distinct IoT devices for each of these classes.

For the VBP device class, we collected sensor measurements on Relative Humidity (RH) and Light Dependent Resistor (LDR) sensors, and obtained the data for the Water Level sensor. For the VBA class, we obtained the actual sensor readings for the $NO_2$ and we collected the data for the Temperature and Elevator Button[8] sensors.[9] For the FBA class, we obtained the sensor readings for the NMHC sensor; for the Smart Home Energy Generation sensor, and for the Wind Speed sensor.

8 We measure the number of times that an elevator button is pressed in each minute.

9 We have collected the sensor readings for RH, LDR, Temperature and Elevator Button data sets in our laboratory over 2.5 months.

We converted each sequence of actual readings obtained for each sensor listed in the VBP and VBA classes above to the sequence of number of bits that the sensor needs to send by performing Huffman compression on the fixed-bit representation of each such reading.[10] On each sensor reading for each sensor listed in the FBA class above, we used a fixed-bit representation.

10 Huffman coding thus leads to a variable number of bits to represent each sensor reading.

For all of the (feature selection, forecasting) pairs as well as FSF under examination, we set the total number of features (namely, the number of successive data samples into the past) to 120.[11]

11 The total number of samples for the data set of each sensor is as follows: 9357 for RH; 65535 for LDR; 25000 for Water Level; 2288 for $NO_2$; 7371 for Temperature; 40080 for Elevator Button; 7715 for NMHC; 8692 for Smart Home; and 25000 for Wind Speed. In addition, the number of quantization levels (i.e. the number of unique values for the number of bits) is 2 for the FBA class and is as follows for each data set in VBP and VBA classes: 6 for RH; 213 for LDR; 60 for Water Level; 7 for $NO_2$; 10 for Temperature; and 15 for the Elevator Button.

**Hyperparameter Search and Feature Selection for Forecasting Models Against Which FSF Is Compared**

In order to ensure that we compare the performance of our FSF architecture against the minimum forecasting error that can be obtained by each competing model, we perform a grid search for tuning the hyperparameters of the MLP, LSTM, ARIMA, 1D CNN, Logistic Regression and Ridge Regression models in this section.

To this end, first, in Table 2, we present the hyperparameters and the search set for each forecasting model. The first column of this table shows the names of the forecasting models. The second column displays the names of the hyperparameters. For all forecasting models except ARIMA, the third column shows the values for the hyperparameters that are set empirically or the set of values over which grid search is performed. For the ARIMA model, the third column shows the tuning methods for its hyperparameters.

In Table 3, we present the feature selection methods against which FSF architecture is compared. The first column of this table displays the names of the data sets. The second column shows the features which are selected via ACF-based Feature Selection. The third, fourth and the fifth columns describe the methodology for ANOVA-based Feature Selection, RFE, and Ridge Regression, respectively.

Table 2: GRID SEARCH FOR TUNING HYPERPARAMETERS OF FORECASTING MODELS

| Model Name | Hyperparameters | Value / Search Set |
|---|---|---|
| MLP | The number of layers $E$ | 4 |
| | The number of neurons $n_E$ at layer $E$ | $K$ |
| | $n_e$ at each layer $e \in \{1,....., E - 1\}$ | $2^j_{j \in \{1,...,8\}}$ |
| | The activation function of each neuron at each hidden layer | *ReLU* |
| | The activation function of each neuron at output layer | *Linear* (for VBP) *softmax* (for VBA & FBA) |

(continued)

| Model Name | Hyperparameters | Value / Search Set |
|---|---|---|
| LSTM | The number of LSTM layers | 1 |
| | The number of LSTM units $h_{LSTM}$ at each LSTM layer | $2^j_{j\in\{1,....,8\}}$ |
| | The number of fully connected layers $E_{LSTM}$ | 3 |
| | The number of neurons $h_{E_{LSTM}}$ at layer $E_{LSTM}$ | $K$ |
| | $h_e$ at each fully connected layer $e \in \{1,...., E_{LSTM} - 1\}$ | $2^j_{j\in\{1,....,8\}}$ |
| | The activation function of each LSTM unit and neuron at hidden fully connected layers | *ReLU* |
| | The activation function of each neuron at output layer | *Linear* (for VBP) *softmax* (for VBA & FBA) |
| 1D CNN | The number of convolution layers | 1 |
| | The number of filters $c_{CNN}$ at each convolution layer | $2^j_{j\in\{1,....,8\}}$ |
| | The kernel size of each convolution filter | (3,3) |
| | The stride of each convolution filter | (2,1) |
| | The number of max pooling layers | 1 |
| | The kernel size of each max pooling filter | (3,3) |
| | The number of fully connected layers $E_{CNN}$ | 4 |
| | The number of neurons $c_{E_{CNN}}$ | $K$ |
| | $c_e$ at each fully connected layer $e \in \{1, ...., E_{CNN} - 1\}$ | $2^j_{j\in\{1,....,8\}}$ |
| | The activation function of each convolution and hidden fully connected layers | *ReLU* |
| | The activation function of each neuron at output layer | *Linear*(*for* VBP) *softmax*(*for* VBA & FBA) |
| Logistic Regression | The regularization term | {0.01,0.1,1,10} |
| | The method of penalty | { none ,l1, l2, elasticnet } |
| | Solver | Newton's method, limited-memoryBroyden-Fletcher-Goldfarb-Shanno algorithm,library for large linear classification, stochastic average gradient,stochastic average gradient with non-smooth penalty |

(continued)

| Model Name | Hyperparameters | Tuning Method |
|---|---|---|
| ARIMA | The order of observation lags, Autoregression (AR in ARIMA), $p$ | Analysis based on PACF |
| | The degree of difference for the samples in the raw time series data, d | Dickey Fuller Test |
| | The number of samples that fall in one Moving Average (MA) window, $q$ | Analysis based on ACF |

Table 3: FEATURE SELECTION METHODS AGAINST WHICH FSF IS COMPARED

| Data Sets | ACF-based Feature Selection | ANOVA-based Feature Selection | Recurrent Feature Elimination (RFE) | Ridge Regression |
|---|---|---|---|---|
| RH | $1,2,3,4,5 \cup 23 * j_{j\in\{1,....,10\}}$ | For each feature, we first compute the F-ratio between that feature and the desired output by using ANOVA in the statsmodels in Python. We sort the features with respect to their F-ratios in descending order and select the first twelve features from this sorted sequence of features | We use the RFE algorithm from scikit-learn library whose inputs are the forecasting model and the desired number of features (denoted by $N$). We selected the forecasting model as Linear Regression. We build an outer loop for $N$ from $1$ to $L$ in order to find the value of $N$ that achieves the minimum forecasting error. | We use the scikit-learn library in Python. By using this library, we normalize the data at the output of Ridge (which is the input of the regressor) by subtracting the mean of the data and by dividing the result by the $l2$-norm of the data. We search for the value of the coefficient of the $l2$-regularization term, $\alpha$, in the set $10^j_{j\in-7,...,-1}$ |
| $NO_2$ | The first 3 samples | | | |
| NMHC | $23 * j_{j\in\{1,.....,5\}}$ | | | |
| LDR | The highest 12 values of the ACF | | | |
| Water Level | | | | |
| Temperature | | | | |
| Elevator Button | | | | |
| Wind Speed | | | | |
| Smart Home Energy Generation | | | | |

**Cross-Validation: Training and Test**

In order to observe the performance of the forecasting models, we train and test each of the forecasting models by using 10-fold cross-validation (CV).[12] We calculate the performance of the forecaster at each fold $f$ and compute the mean performance over all of the folds. At each fold $f,$ during training, we minimize the Mean Absolute Error (MAE) for the VBP class, and the Categorical Cross-Entropy for the VBA and the FBA classes[13]. In order to prevent overfitting, instead of using a fixed number of epochs, we use a variable number of epochs across all of the folds of any given data set. [12] In order to obtain a 10-fold CV, we divide the time series data set into 10 disjoint subsets of an equal number of elements in each subset. Then, in each step (namely, "fold") $f$ of the 10-fold CV, we use the $f^{th}$ subset as the test set and the rest nine subsets as the training set. That is, by the end of the CV, we have use each subset nine times as the training set and exactly once as the test set.

[13] We use *softmax* at the output of the forecaster for the VBA and the FBA classes. As a result, we minimize the Categorical Cross-Entropy for the misclassification error between the output classes that are constituted by the distinct number of bits that a sensor can generate.

We define $1/_2$-sMAPE as sMAPE divided by 2.[14]. Furthermore, in the rest of this invention, misclassification error will refer to the average of the fraction of classification errors across the length $K$ vector of forecasts in Figure 1

[14] This serves to normalize this error measure such that it lies in the range [0%, 100%] rather than in the range [0%, 200%] (as is the case for the original sMAPE measure)..

As the output of CV, we obtain three different measurements: (1) the forecasting error $^1/_2$-sMAPE for the VBP and the VBA classes, and the misclassification error for the FBA class, (2) the training time, and (3) the execution time.

**Performance Comparison of the FSF Architecture Against Existing Forecasting Models**

In this section, we aim to present the performance evaluation of the FSF architecture and its comparison against the existing forecasting models. To this end, for each data set in VBP, VBA and FBA classes, we measure and display the performance of each forecasting model averaged over the values of $K$ from 1 to 15.[15]

[15] In the Appendix, we present the performance comparison for each value of $K$ separately.

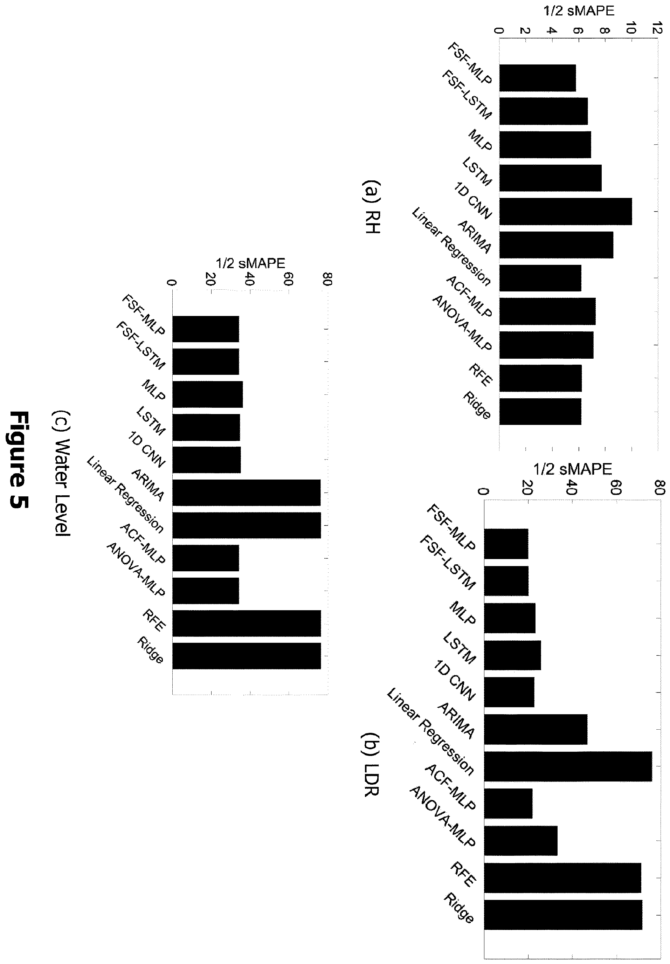

First, in Figure 5, we present the average $^1/_2$-sMAPE performance of our FSF architecture under each of the MLP and LSTM forecasters (namely FSF-MLP and FSF-LSTM respectively) for the RH sensor, LDR, and the Water Level data sets, each of which falls in the VBP class. In this figure, we see that for all of these data sets, FSF-MLP achieves the lowest forecasting error among all of the forecasting models. We also note that the performance of FSF-MLP almost equals that of FSF-LSTM for the LDR and the Water Level data sets.

For the RH data set in Figure 5(a), we see that the linear forecasting models (RFE, Ridge, Linear Regression) achieve the minimum forecasting error among the models under comparison (excluding FSF-MLP and FSF-LSTM), which suggests that an approximately linear relationship is inherent in the data. In Figure 5(b), for the LDR data set, we see that the nonlinear forecasting models outperform the linear and statistical models, which suggests that a nonlinear relationship is inherent in the data. In Figure 5(c), for the Water Level data set, we see that the nonlinear models that possess feature selection capability (namely ACF-MLP and ANOVA-MLP) or those with feature extraction in their internal architecture (namely LSTM and 1D CNN) outperform the other existing models. The fact that FSF-MLP outperforms the best existing models in each of these three categories suggests that FSF is able to capture both linear and nonlinear relationships as well as performing well in capturing trends in data for which feature extraction is crucial. Jointly, for the VBP class, these results point to the advantages of our highly flexible, end-to-end trainable FSF architecture.

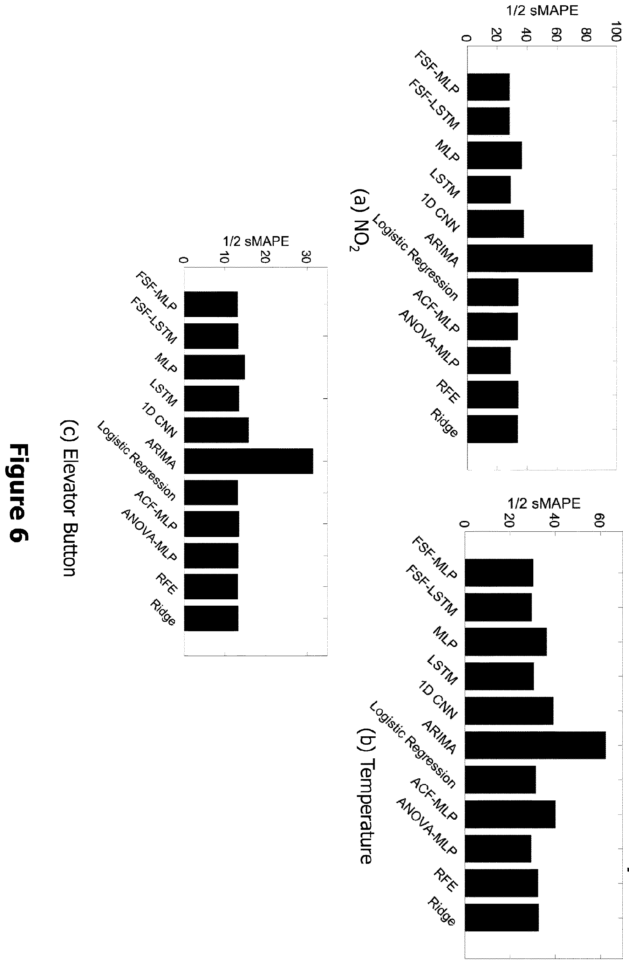

Second, in Figure 6, we present the $^1/_2$-sMAPE performance (averaged over $K$) of our FSF-MLP and FSF-LSTM architectures for the $NO_2$, Temperature, and the Elevator Button data sets that fall in the VBA class. Our results in this figure show that both the FSF-MLP and FSF-LSTM architectures achieve at least the same performance as those existing models that achieve the minimum forecasting error. In addition, in Figure 6(a), LSTM and ANOVA-MLP are seen to be the forecasting models that are the most competitive against our FSF architecture for the $NO_2$ data set. The reason is that $l$ approaches $L,$ the F-ratio increases and thus the features $x_{t-l}$ that have values near $L$ become more important for this data set. Accordingly, LSTM performs well because it captures the long-term relationships, and ANOVA-MLP performs well because it selects the features that have a high F-ratio. This implies that the FSF architecture is able to select the important features, each of which has a long-term relationship with the future samples.

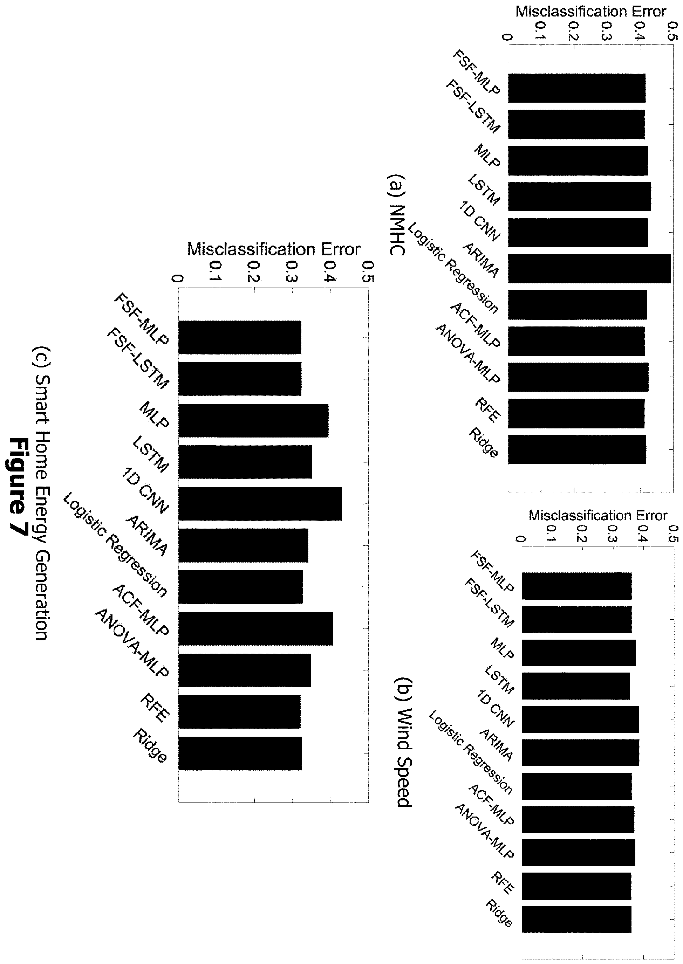

Third, in Figure 7, we present the average misclassification error of FSF-MLP and FSF-LSTM for the NMHC, Wind Speed, and the Smart Home Generation data sets that fall in the FBA class. Our results in this figure show that both FSF-MLP and FSF-LSTM are able to achieve either the minimum error or an error close to the minimum that is achieved by the existing forecasting models.

In summary, the above results jointly show that FSF-MLP and FSF-LSTM achieve either the best performance or a performance that is competitive with the best-performing models for all data sets. In addition, our results suggest that the generalization ability of the FSF architecture across widely different data sets is high. On the other hand, we also see that the models that utilize the FSF architecture significantly outperform the existing forecasting models for the data sets in the VBP class. Furthermore, the FSF architecture is able to achieve a performance that is the same as or close to that of the best existing models for the VBA and the FBA classes.

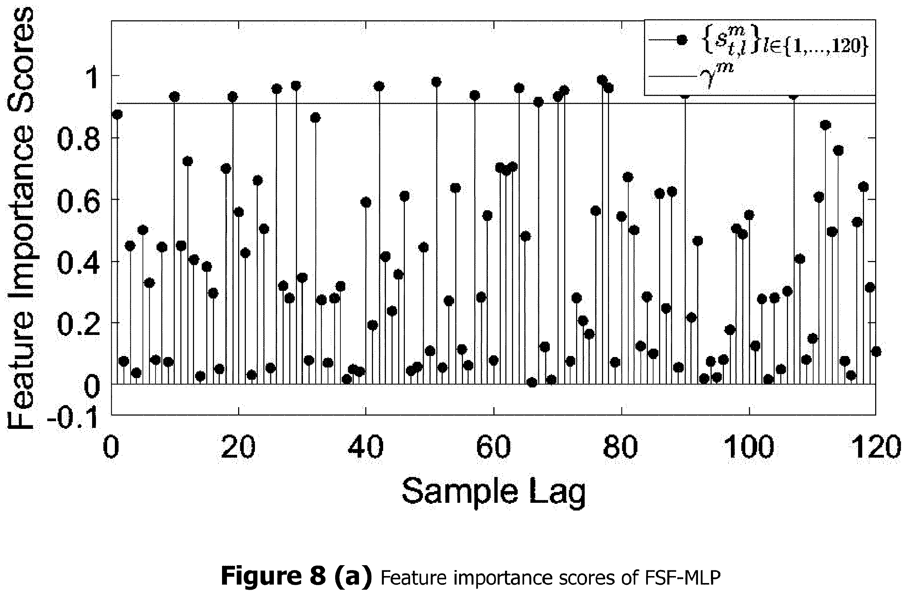

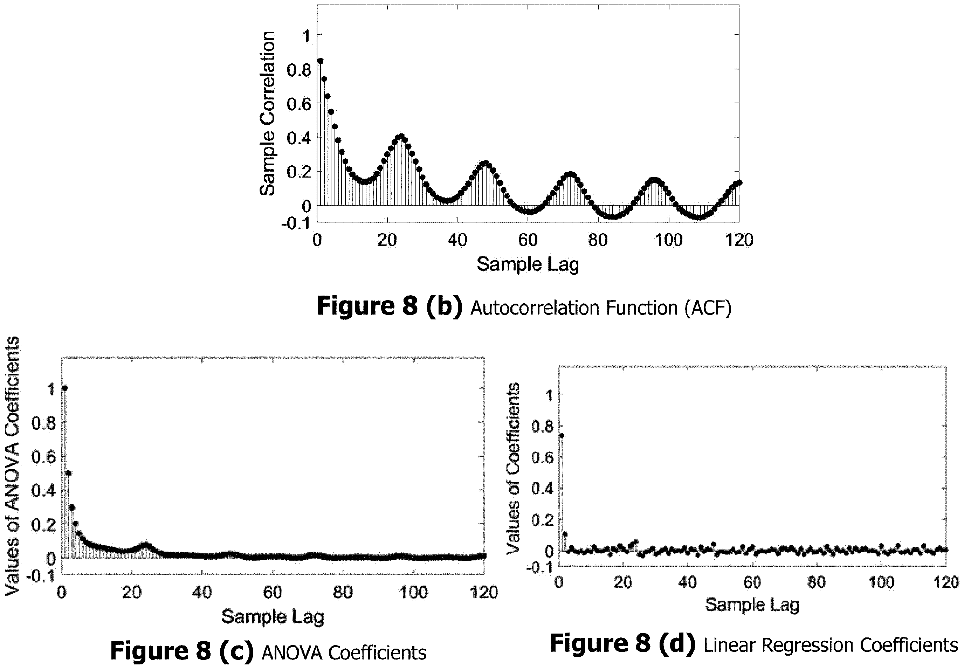

We now aim to display the differences between the feature importance scores that are calculated by the FISC module in the FSF architecture and those are calculated by the other feature selection methods. To this end, in Figure 8 for the RH data set, we show the average (over samples) of the feature importance scores in FSF-MLP[16], the coefficients of Linear Regression, the values of the ACF, and the normalized F-ratios of ANOVA.

[16] For the RH data set, we only present the feature importance scores for FSF-MLP because FSF-MLP outperforms FSF-LSTM in this case.

Figure 8(a) shows the vector of feature importance scores of FSF-MLP, which appears at the output of the FISC module. We see that the FSF architecture captures the important features that do not possess any seasonal trend and which thus cannot be found by a simple linear operation. In Figure 8(b), we see that ACF captures the seasonal trends of the VBP traffic generation; however, feature selection based only on these seasonal trends is suboptimal due to the linear structure of the ACF.

Figure 8(c) presents the coefficients in ANOVA, for which the scores of the features are defined based on variance. In this figure, we see that the features $x_{t-l}$ for smaller values of $l$ are found to be more important by ANOVA. In Figure 8(d), we see that the Linear Regression model amplifies the data sample with a time lag of 1, namely $x_{t-1}$, which has the highest covariance with $x_{t+1}$ according to ANOVA. That is, we see that the FSF architecture is able to capture this nonlinear relationship (that is not captured by any other method) between the features and the desired output of the forecaster in order to maximize the forecasting performance.

**Comparison of the FSF Architecture Against Existing Forecasting Models With Respect to Training and Execution Times**

In order to present the trade-off between the forecasting performance and the computation (training and execution) time of the FSF architecture, we now present our results on the training and the execution time of each model in the previous section. We have obtained these results on the Google Colab computational platform that has a Tensor Processing Unit (TPU) accelerator.

**Training Time**

In this section, the comparison of the forecasting models with respect to training timeis resented.. Note that training time depends not only on the architecture of the forecasting model but also on the number of samples in the data set; hence, the training times of a forecasting model on distinct data sets are not directly comparable.

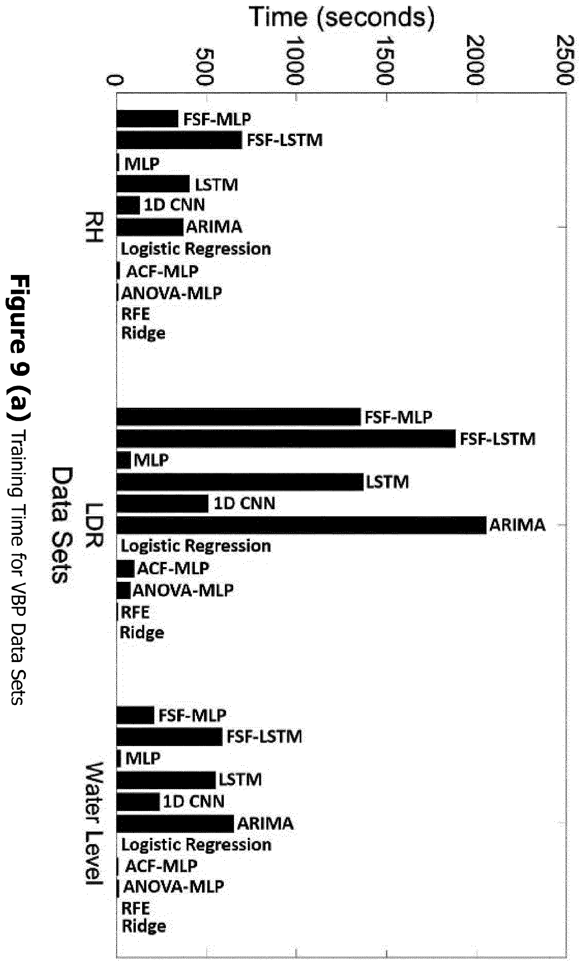

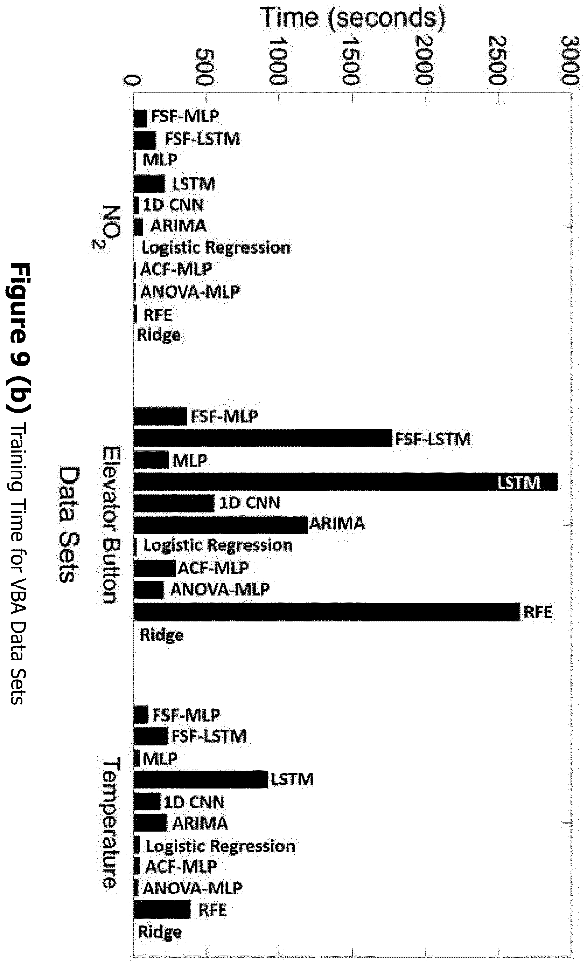

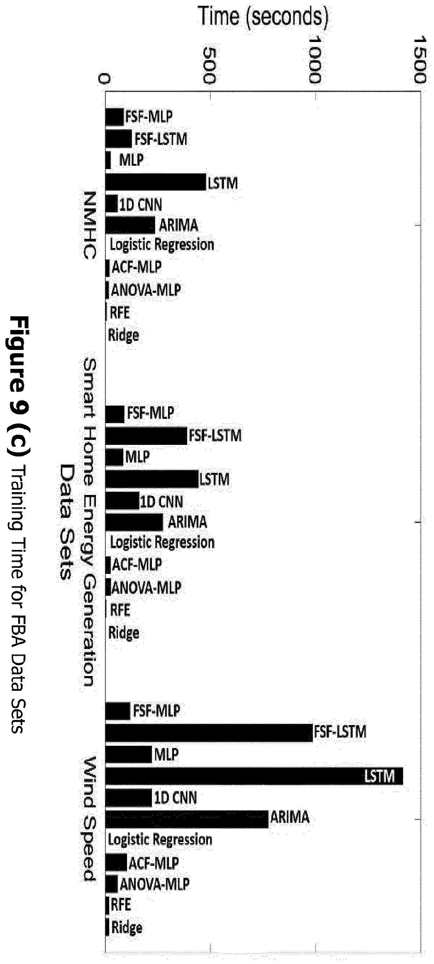

In Figure 9, the training time of each forecasting model for the data sets in the VBP, VBA and the FBA classes are preseted.. In this figure, we see that the training time of the FSF architecture is comparable to that of LSTM, 1D CNN, and ARIMA. In addition, the training times of FSF-MLP, FSF-LSTM, LSTM, 1D CNN, and ARIMA models are higher than those of the stand-alone MLP and the linear forecasting models.

**Execution Time**

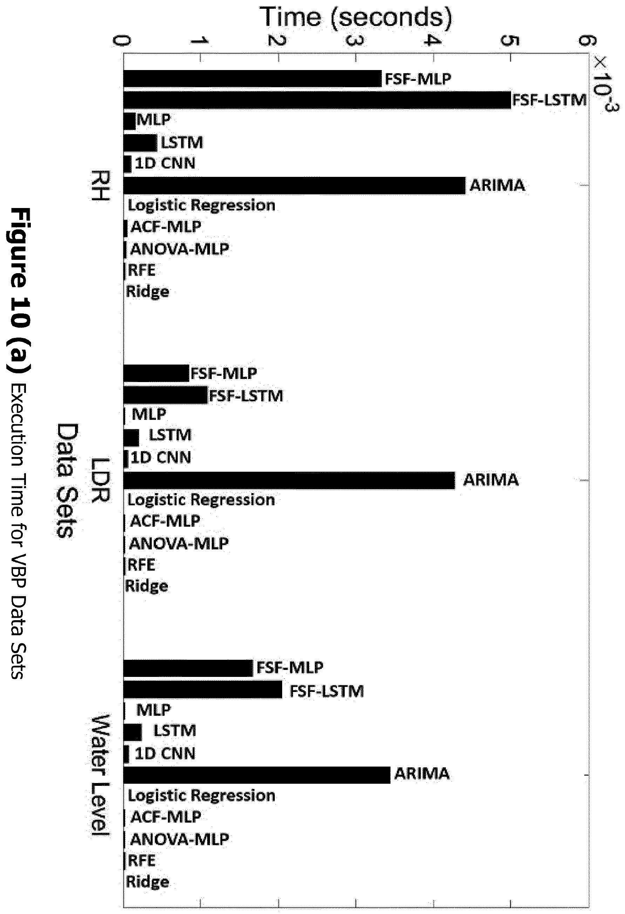

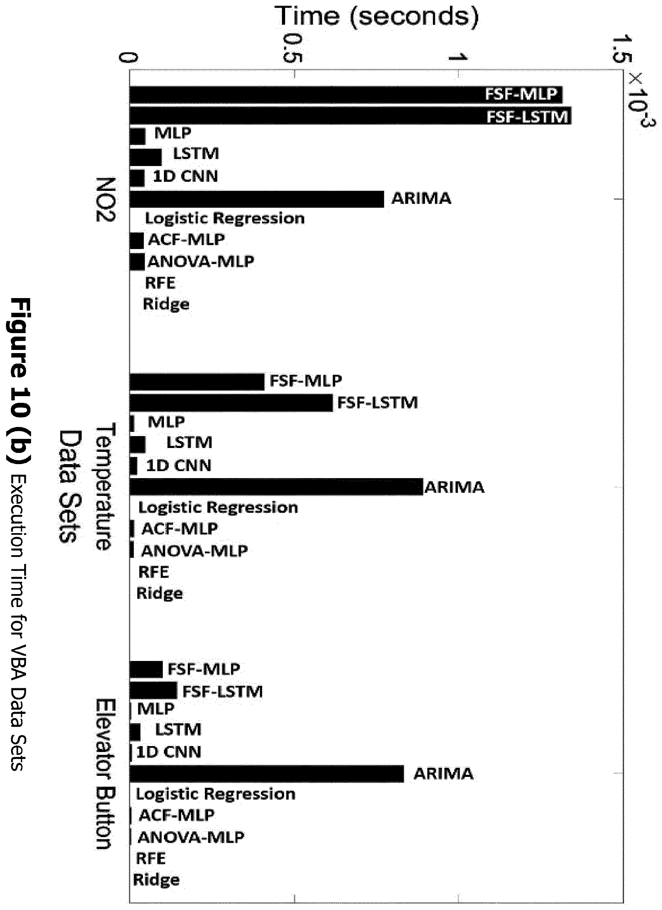

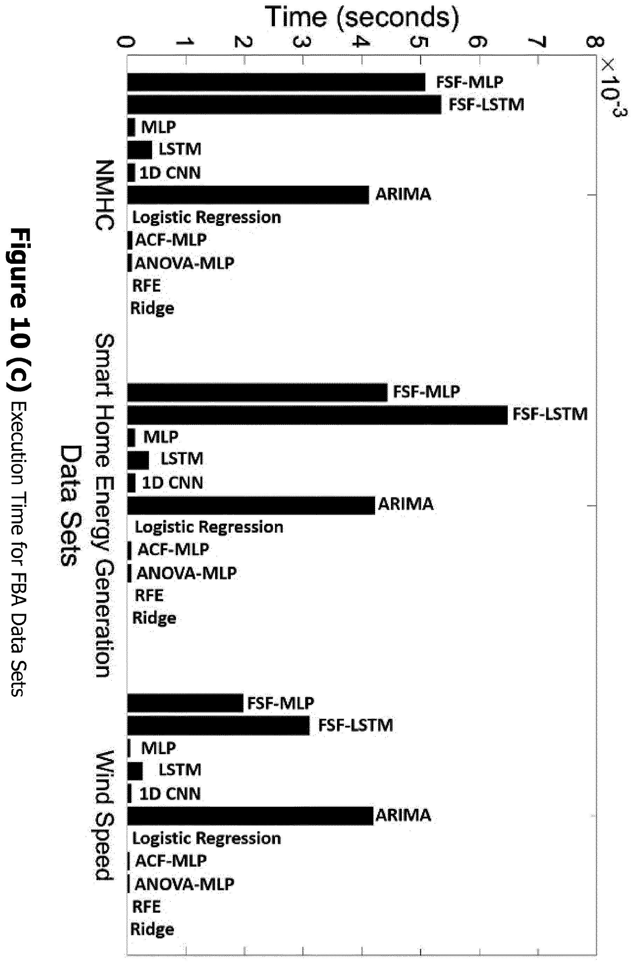

In Figure 10, we present the execution time of each forecasting model for the data sets in the VBP, VBA, and the FBA classes. We see that for all data sets, the execution times of FSF-MLP and FSF-LSTM are less than 10 ms, which is highly acceptable for the IoT applications that require subsecond computation time. On the other hand, we also see that FSF-MLP, FSF-LSTM, and ARIMA have the highest and Linear Regression, Logistic Regression, RFE, and Ridge have the lowest execution times. Although the execution time of the FSF architecture is comparable to that of ARIMA in the majority of cases, it is 1 to 3 orders higher than those of LSTM, MLP, ACF-MLP, ANOVA-MLP, 1D CNN, Linear Regression, Logistic Regression, RFE, and Ridge.

**Conclusion**

A novel feature selection-forecasting architecture, called FSF, that is able to perform automatic, dynamic selection of features in order to minimize the forecasting error for predictive QoS routing in SDNs is developed. The architecture stands at a point between Deep Learning techniques that discover all of the features themselves but require long data for training, and the rest of the Machine Learning techniques that select features based on existing filter-based, wrapper-based and embedded feature selection methods.
The performance of FSF architecture on the problem of forecasting the future traffic generation patterns of individual IoT devices is demonstrated. FSF achieves either the best or close to the best performance among a competitive selection of existing (feature selection, forecasting) technique pairs is found. Architecture achieves such high performance by virtue of the fact that all of the parameters of the architecture are end-to-end trainable via backpropagation.
The execution time of FSF per sample is below 7 ms on the Google Colab platform. Such an execution time is reasonable for massive IoT applications, in which the delay constraints are on the order of seconds to hours. As a result, we expect that the FSF architecture can be used as a forecaster to achieve predictive resource allocation in next-generation networks for massive IoT.
Whenever the number of data samples is not sufficient for the Deep Learning-based forecasting algorithms to converge, FSF provides a high-performance solution that can only be approximated by the existing (feature selection, forecasting) method pairs. Fine-tuning the hyperparameters of all of the feature selection methods and the forecasters separately in order to find the best-performing solution is an arduous task. FSF obviates this task by discovering a high-performance solution automatically. As a result, FSF will have an impact on multiple areas beyond IoT.

**Appendix: Performance Comparison With Respect to the Step-Ahead Parameter**

In this appendix, we show how forecasting error varies with respect to $K$, the step-ahead forecasting parameter. the results that appear in Figure 5 and description show the forecasting error that has been averaged over the values of $K$ that appear in Tables 3,4, 5, respectively. The first column of each of these tables displays the range of values of the number of bits of traffic generated by each sensor, and the number of samples. The second column shows the models, and the remaining columns display the forecasting error for the values of $K$ in our measurements. The lowest value of the forecasting error has been indicated in boldface for each $K$. Our key observation is that FSF-MLP and FSF-LSTM either have the lowest or close to the lowest forecasting error across all schemes across all $K$ over all of the data set classes. Hence, we see that the main conclusion that we have drawn regarding the performance of FSF architecture holds not only with respect to the average of the forecasting error over all $K$ but also for each value of $K$ in the underlying set of results that led to that average.

Table 4: CROSS-VALIDATION $1/_2$-sMAPE RESULTS FOR THE VBP DATA SETS

| DATA SETS | MODELS | K=1 | K=2 | K=3 | K=4 | K=5 | K = 10 | K= 15 |
|---|---|---|---|---|---|---|---|---|
| RH 1 kbit - 7 kbits 9357 samples | FSF-MLP | 3.38 | 4.33 | 5.25 | 5.77 | 6.16 | 7.63 | 7.83 |
| | FSF-LSTM | 3.43 | 4.89 | 6.74 | 7.06 | 7.82 | 7.94 | 8.88 |
| | MLP | 5.24 | 5.99 | 6.5 | 6.93 | 7.15 | 8 | 8.75 |
| | LSTM | 6.1 | 6.44 | 7.41 | 7.52 | 7.89 | 8.95 | 9.8 |
| | 1D CNN | 9.81 | 9.09 | 9.34 | 10.68 | 9.58 | 10.41 | 11.17 |
| | ARIMA | 5.98 | 7.3 | 8.19 | 8.78 | 9.18 | 10.22 | 10.56 |
| | Linear Regression | 3.5 | 4.76 | 5.68 | 6.3 | 6.75 | 7.94 | 8.43 |
| | ACF-MLP | 5.23 | 6.02 | 6.78 | 7.49 | 7.7 | 8.65 | 8.84 |
| | ANOVA-MLP | 5.76 | 6.29 | 6.89 | 6.98 | 6.96 | 7.96 | 8.83 |
| | RFE | 3.23 | 4.73 | 5.76 | 6.48 | 6.98 | 7.93 | 8.44 |
| | Ridge | 3.49 | 4.76 | 5.67 | 6.29 | 6.75 | 7.94 | 8.43 |
| LDR 2 kbits - 1984 kbits 65535 samples | FSF-MLP | 20.01 | 18.18 | 20.08 | 20.19 | 20.19 | 20.39 | 20.64 |
| | FSF-LSTM | 19.45 | 19.59 | 21.29 | 18.16 | 19.86 | 21.05 | 20.84 |
| | MLP | 27.14 | 22.63 | 21.09 | 23.53 | 24.04 | 21.92 | 22.45 |
| | LSTM | 25.03 | 25.05 | 24.55 | 23.83 | 20.5 | 25.16 | 36.54 |
| | 1D CNN | 22.95 | 23.96 | 22.11 | 23.03 | 22.08 | 22.16 | 22.42 |
| | ARIMA | 45.35 | 46.26 | 46.67 | 46.93 | 47.1 | 47.57 | 47.85 |
| | Linear Regression | 74.59 | 75.52 | 75.65 | 75.97 | 76.11 | 77.08 | 77.69 |
| | ACF-MLP | 20.92 | 21.21 | 23.53 | 23.53 | 21.23 | 21.27 | 21.8 |
| | ANOVA-MLP | 42.31 | 40.17 | 39.9 | 25.48 | 41.21 | 21.57 | 21.52 |
| | RFE | 70.23 | 70.12 | 70.59 | 71.19 | 71.02 | 72.28 | 72.58 |
| | Ridge | 70.42 | 70.83 | 71.09 | 71.37 | 71.61 | 72.51 | 73.19 |
| Water Level 6 kbits - 543 kbits 25000 samples | FSF-MLP | 34.41 | 34.55 | 34.52 | 34.44 | 34.31 | 34.43 | 33.6 |
| | FSF-LSTM | 35.16 | 34.06 | 34.04 | 33.92 | 34.35 | 34.35 | 34.34 |
| | MLP | 35.88 | 35.67 | 36.72 | 34.96 | 35.83 | 35.96 | 37.8 |
| | LSTM | 34.96 | 34.98 | 34.51 | 34.22 | 36.09 | 34.57 | 34.65 |
| | 1D CNN | 35.96 | 34.89 | 34.44 | 34.35 | 35.61 | 34.9 | 35.66 |
| | ARIMA | 76.02 | 76.02 | 76.02 | 76.01 | 76.02 | 76.05 | 76.07 |
| | Linear Regression | 76.2 | 76.21 | 76.21 | 76.21 | 76.21 | 76.22 | 76.22 |
| | ACF-MLP | 34.35 | 34.34 | 34.35 | 34.35 | 34.35 | 34.34 | 34.34 |
| | ANOVA-MLP | 34.34 | 34.34 | 34.34 | 34.34 | 34.35 | 34.34 | 34.34 |
| | RFE | 76.2 | 76.2 | 76.21 | 76.21 | 76.21 | 76.22 | 76.22 |
| | Ridge | 76.2 | 76.21 | 76.21 | 76.21 | 76.21 | 76.22 | 76.22 |

Table 5: CROSS-VALIDATION $^1/_2$-sMAPE RESULTS FOR THE VBA DATA SETS

| | Models | K = 1 | K=2 | K=3 | K=4 | K=5 | K = 10 | K= 15 |
|---|---|---|---|---|---|---|---|---|
| NO2 max. 6 kbits 2288 samples | FSF-MLP | 18.24 | 24.81 | 27.72 | 29.31 | 30.84 | 33.3 | 33.57 |
| | FSF-LSTM | 17.73 | 22.28 | 28.67 | 30.94 | 31.48 | 33.42 | 33.86 |
| | MLP | 36.97 | 39.26 | 41.35 | 34.85 | 34.62 | 33.95 | 34.13 |
| | LSTM | 19.96 | 27.3 | 24.24 | 30.42 | 31.82 | 32.73 | 37.48 |
| | 1D CNN | 44.08 | 34.14 | 43.11 | 36.97 | 35.63 | 36.19 | 33.99 |
| | ARIMA | 81.15 | 82.77 | 83.57 | 84.02 | 84.31 | 85.1 | 85.6 |
| | Logistic Regression | 32.45 | 34.98 | 34.61 | 34.41 | 33.95 | 34.08 | 33.92 |
| | ACF-MLP | 33.86 | 33.86 | 33.85 | 33.84 | 33.85 | 33.87 | 33.87 |
| | ANOVA-MLP | 19.74 | 25.9 | 29.58 | 29.74 | 31.74 | 32.52 | 33.7 |
| | RFE | 32.96 | 34.85 | 34.54 | 34.37 | 34.25 | 34.06 | 33.98 |
| | Ridge | 33.27 | 33.79 | 33.81 | 33.91 | 33.91 | 34.07 | 34.13 |
| Temperature max. 11 kbits 7371 samples | FSF-MLP | 29.55 | 29.85 | 29.62 | 29.76 | 31.81 | 30.39 | 30.84 |
| | FSF-LSTM | 29.08 | 28.94 | 29.55 | 29.48 | 29.53 | 30.4 | 31 |
| | MLP | 38.15 | 39.04 | 39.83 | 32.48 | 34.7 | 33.91 | 36.18 |
| | LSTM | 29.15 | 28.5 | 28.7 | 31.49 | 32.07 | 30.72 | 33.17 |
| | 1D CNN | 36.97 | 41.39 | 36.28 | 40.91 | 41.86 | 36.59 | 40.92 |
| | ARIMA | 61.21 | 61.98 | 62.25 | 62.25 | 62.46 | 63.43 | 63.48 |
| | Logistic Regression | 30.4 | 30.41 | 30.86 | 31.02 | 31.3 | 32.64 | 33.6 |
| | ACF-MLP | 40.17 | 40.13 | 40.07 | 40.02 | 40.17 | 40.04 | 40.23 |
| | ANOVA-MLP | 30.9 | 29.75 | 27.72 | 27.42 | 30.98 | 29.83 | 29.95 |
| | RFE | 30.24 | 30.32 | 30.53 | 31.78 | 32.69 | 34.85 | 36.12 |
| | Ridge | 31.96 | 31.99 | 32.22 | 32.4 | 32.63 | 33.621 | 34.53 |
| Elevator Button max. 34 kbits 40080 samples | FSF-MLP | 12.96 | 12.96 | 12.99 | 13.08 | 13.08 | 13.25 | 13.2 |
| | FSF-LSTM | 13.09 | 13.15 | 13.17 | 13.19 | 13.32 | 13.32 | 13.25 |
| | MLP | 15.41 | 15.71 | 14.1 | 15.29 | 15.11 | 13.77 | 14.59 |
| | LSTM | 13.22 | 13.15 | 13.43 | 13.85 | 13.39 | 13.51 | 13.42 |
| | 1D CNN | 16.91 | 16.28 | 15.65 | 16.96 | 14.65 | 15.69 | 13.74 |
| | ARIMA | 29.83 | 30.17 | 30.55 | 31.24 | 31.66 | 32.97 | 33.85 |
| | Logistic Regression | 12.84 | 12.98 | 13.04 | 13.12 | 13.19 | 13.36 | 13.45 |
| | ACF-MLP | 13.51 | 13.48 | 13.47 | 13.39 | 13.43 | 13.46 | 13.47 |
| | ANOVA-MLP | 12.8 | 13.06 | 13.09 | 13.25 | 13.88 | 13.35 | 13.39 |
| | RFE | 12.84 | 12.97 | 13.07 | 13.12 | 13.2 | 13.41 | 13.49 |
| | Ridge | 13.14 | 13.2 | 13.23 | 13.25 | 13.27 | 13.33 | 13.35 |

Table 6: CROSS-VALIDATION MISCLASSIFICATION RESULTS FOR THE FBA DATA SETS

| | Models | K = 1 | K=2 | K=3 | K=4 | K=5 | K = 10 | K = 15 |
|---|---|---|---|---|---|---|---|---|
| NMHC 34 kbits 7715 samples | FSF-MLP | 0.416 | 0.415 | 0.414 | 0.417 | 0.416 | 0.414 | 0.417 |
| | FSF-LSTM | 0.413 | 0.412 | 0.412 | 0.412 | 0.413 | 0.413 | 0.412 |
| | MLP | 0.462 | 0.414 | 0.412 | 0.417 | 0.421 | 0.417 | 0.412 |
| | LSTM | 0.469 | 0.466 | 0.412 | 0.426 | 0.412 | 0.415 | 0.417 |
| | 1D CNN | 0.444 | 0.421 | 0.443 | 0.412 | 0.416 | 0.412 | 0.413 |
| | ARIMA | 0.49 | 0.493 | 0.492 | 0.492 | 0.492 | 0.493 | 0.495 |
| | Logistic Regression | 0.419 | 0.419 | 0.42 | 0.421 | 0.419 | 0.421 | 0.421 |
| | ACF-MLP | 0.412 | 0.412 | 0.413 | 0.412 | 0.413 | 0.412 | 0.413 |
| | ANOVA-MLP | 0.465 | 0.415 | 0.439 | 0.413 | 0.412 | 0.412 | 0.413 |
| | RFE | 0.412 | 0.412 | 0.412 | 0.412 | 0.412 | 0.412 | 0.412 |
| | Ridge | 0.417 | 0.417 | 0.417 | 0.417 | 0.417 | 0.417 | 0.418 |
| Smart Home Energy Generation 16 kbits 8692 samples | FSF-MLP | 0.258 | 0.291 | 0.315 | 0.33 | 0.333 | 0.357 | 0.366 |
| | FSF-LSTM | 0.258 | 0.297 | 0.315 | 0.324 | 0.338 | 0.36 | 0.363 |
| | MLP | 0.332 | 0.3802 | 0.389 | 0.428 | 0.423 | 0.401 | 0.402 |
| | LSTM | 0.272 | 0.367 | 0.331 | 0.352 | 0.377 | 0.379 | 0.379 |
| | 1D CNN | 0.448 | 0.448 | 0.402 | 0.425 | 0.444 | 0.402 | 0.436 |
| | ARIMA | 0.268 | 0.319 | 0.341 | 0.352 | 0.359 | 0.371 | 0.376 |
| | Logistic Regression | 0.258 | 0.296 | 0.319 | 0.334 | 0.343 | 0.362 | 0.369 |
| | ACF-MLP | 0.411 | 0.403 | 0.408 | 0.408 | 0.402 | 0.401 | 0.402 |
| | ANOVA-MLP | 0.282 | 0.315 | 0.334 | 0.369 | 0.376 | 0.378 | 0.382 |
| | RFE | 0.255 | 0.299 | 0.313 | 0.326 | 0.335 | 0.353 | 0.359 |
| | Ridge | 0.258 | 0.293 | 0.318 | 0.332 | 0.341 | 0.359 | 0.367 |
| Wind Speed 64 kbits 25000 samples | FSF-MLP | 0.356 | 0.36 | 0.358 | 0.357 | 0.359 | 0.364 | 0.365 |
| | FSF-LSTM | 0.356 | 0.355 | 0.36 | 0.36 | 0.361 | 0.362 | 0.366 |
| | MLP | 0.369 | 0.393 | 0.369 | 0.369 | 0.369 | 0.369 | 0.369 |
| | LSTM | 0.272 | 0.367 | 0.362 | 0.352 | 0.377 | 0.371 | 0.379 |
| | 1D CNN | 0.402 | 0.379 | 0.387 | 0.379 | 0.369 | 0.405 | 0.369 |
| | ARIMA | 0.39 | 0.389 | 0.389 | 0.389 | 0.387 | 0.38 | 0.378 |
| | Logistic Regression | 0.354 | 0.357 | 0.358 | 0.359 | 0.361 | 0.365 | 0.368 |
| | ACF-MLP | 0.369 | 0.369 | 0.369 | 0.369 | 0.369 | 0.369 | 0.369 |
| | ANOVA-MLP | 0.373 | 0.359 | 0.374 | 0.371 | 0.377 | 0.376 | 0.369 |
| | RFE | 0.352 | 0.352 | 0.354 | 0.356 | 0.357 | 0.368 | 0.368 |
| | Ridge | 0.354 | 0.357 | 0.358 | 0.359 | 0.359 | 0.364 | 0.366 |

Based on the detailed explanations above, a novel feature selection-forecasting architecture, called FSF, that forecasts Internet of Things traffic for predictive Quality of Service routing in Software-Defined Networks is developed.
The feature selection-forecasting (FSF) architecture comprising;

a. Feature Importance Score Calculation (FISC) module, which transforms the input vector of the past data into a vector of importance scores, and

b. Gamma-Gated Feature Selection (GG-FS) module, which compares these importance scores against a threshold in order to determine dynamically which elements of the input vector will be selected as features to be passed onto the Forecasting module, and

c. Forecasting module, which performs forecasting based on these selected features.

The key novelty in design is that all of the parameters in FSF architecture are trainable end-to-end via backpropagation.

## References

[1] W. Kong, Z. Y. Dong, Y. Jia, D. J. Hill, Y. Xu, and Y. Zhang, "Short-term residential load forecasting based on LSTM recurrent neural network," IEEE Trans. Smart Grid, vol. 10, no. 1, pp. 841-851, Jan. 2019.

[2] C.-J. Huang and P.-H. Kuo, "A deep CNN-LSTM model for particulate matter (PM2.5) forecasting in smart cities," Sensors, vol. 18, no. 7, p. 2220, Jul. 2018.

[3] M. Sheikhan and N. Mohammadi, "Neural-based electricity load forecasting using hybrid of GA and ACO for feature selection," Neural Comput. Appl., vol. 21, no. 8, pp. 19611970, Nov. 2012.

[4] M. Nakip, B. C. Gül, V. Rodoplu, and C. Güzelis, "Comparative study of forecasting schemes for IoT device traffic in machine-to-machine communication," in Proc. 4th Int. Conf. Cloud Comput. Internet Things (CCIOT), 2019, pp. 102-109.

[5] M. Nakip, V. Rodoplu, C. Güzelis, and D. T. Eliiyi, "Joint forecasting-scheduling for the Internet of Things," in Proc. IEEE Global Conf. Internet Things (GCIoT), Dec. 2019, pp. 1-7.

[6] V. Rodoplu, M. Nakip, D. T. Eliiyi, and C. Güzelis, "A multiscale algorithm for joint forecastingscheduling to solve the massive access problem of IoT," IEEE Internet Things Journal, vol. 7, no. 9, pp. 8572-8589, Sep. 2020.

[7] V. Rodoplu, M. Nakip, R. Qorbanian, and D. T. Eliiyi, "Multi-channel joint forecasting-scheduling for the Internet of Things," IEEE Access, vol. 8, pp. 217324-217354, 2020.

[8] N. Saha, S. Bera, and S. Misra, "Sway: Traffic-aware QoS routing in software-defined IoT," IEEE Transactions on Emerging Topics in Computing 9, no. 1 (2018): 390-401.

[9] F. Tang, Z. M. Fadlullah, B. Mao, and N. Kato, "An intelligent traffic load prediction-based adaptive channel assignment algorithm in SDN-IoT: A deep learning approach," IEEE Internet of Things Journal 5, no. 6 (2018): 5141-5154.

## Claims

1. A feature selection-forecasting (FSF) architecture that forecasts Internet of Things traffic for predictive Quality of Service routing in Software-Defined Network comprising;

   a. Feature Importance Score Calculation (FISC) module, which transforms the input vector of the past data into a vector of importance scores, and

   b. Gamma-Gated Feature Selection (GG-FS) module, which compares these importance scores against a threshold in order to determine dynamically which elements of the input vector will be selected as features to be passed onto the Forecasting module, and

   c. Forecasting module, which performs forecasting based on these selected features.

2. The feature selection-forecasting architecture according to claim 1, wherein all of the parameters in FSF architecture are trainable end-to-end via backpropagation.

End-to-End Trainable Feature Selection - Forecasting Architecture

**Figure 1**

EP 4 113 381 A1

**Figure 2**

EP 4 113 381 A1

**Figure 3**

**Figure 4**

Figure 5

(a) RH

(b) LDR

(c) Water Level

Figure 6

(a) NO$_2$

(b) Temperature

(c) Elevator Button

(a) NMHC

(b) Wind Speed

(c) Smart Home Energy Generation

**Figure 7**

**Figure 8 (a)** Feature importance scores of FSF-MLP

Figure 8 (c) ANOVA Coefficients

Figure 8 (b) Autocorrelation Function (ACF)

Figure 8 (d) Linear Regression Coefficients

**Figure 9 (a)** Training Time for VBP Data Sets

**Figure 9 (b)** Training Time for VBA Data Sets

**Figure 9 (c)** Training Time for FBA Data Sets

**Figure 10 (a)** Execution Time for VBP Data Sets

**Figure 10 (b)** Execution Time for VBA Data Sets

**Figure 10 (c)** Execution Time for FBA Data Sets

**Europäisches Patentamt**
**European Patent Office**
**Office européen des brevets**

# EUROPEAN SEARCH REPORT

Application Number

EP 21 21 8428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NAKIP MERT ET AL: "Joint Forecasting-Scheduling for the Internet of Things", 2019 IEEE GLOBAL CONFERENCE ON INTERNET OF THINGS (GCIOT), IEEE, 4 December 2019 (2019-12-04), pages 1-7, XP033749356, DOI: 10.1109/GCIOT47977.2019.9058408 [retrieved on 2020-04-06] * page 1 - page 2; figure 1 * ----- | 1,2 | INV. G06N3/04 ADD. G06N3/08 |
| Y | YANLING LI ET AL: "Threshold Determining Method for Feature Selection", ELECTRONIC COMMERCE AND SECURITY, 2009. ISECS '09. SECOND INTERNATIONAL SYMPOSIUM ON, IEEE, PISCATAWAY, NJ, USA, 22 May 2009 (2009-05-22), pages 273-277, XP031536698, ISBN: 978-0-7695-3643-9 * the whole document * ----- | 1,2 | |
| | | | TECHNICAL FIELDS SEARCHED (IPC) G06N |

The present search report has been drawn up for all claims

| Place of search | Date of completion of the search | Examiner |
|---|---|---|
| The Hague | 16 June 2022 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. KONG ; Z. Y. DONG ; Y. JIA ; D. J. HILL ; Y. XU ; Y. ZHANG.** Short-term residential load forecasting based on LSTM recurrent neural network. *IEEE Trans. Smart Grid,* January 2019, vol. 10 (1), 841-851
- **C.-J. HUANG ; P.-H. KUO.** A deep CNN-LSTM model for particulate matter (PM2.5) forecasting in smart cities. *Sensors,* July 2018, vol. 18 (7), 2220
- **M. SHEIKHAN ; N. MOHAMMADI.** Neural-based electricity load forecasting using hybrid of GA and ACO for feature selection. *Neural Comput. Appl.,* November 2012, vol. 21 (8), 19611970
- **M. NAKIP ; B. C. GÜL ; V. RODOPLU ; C. GÜZELIS.** Comparative study of forecasting schemes for IoT device traffic in machine-to-machine communication. *Proc. 4th Int. Conf. Cloud Comput. Internet Things (CCIOT),* 2019, 102-109
- **M. NAKIP ; V. RODOPLU ; C. GÜZELIS ; D. T. ELIIYI.** Joint forecasting-scheduling for the Internet of Things. *Proc. IEEE Global Conf. Internet Things (GCIoT),* December 2019, 1-7
- **V. RODOPLU ; M. NAKIP ; D. T. ELIIYI ; C. GÜZELIS.** A multiscale algorithm for joint forecastingscheduling to solve the massive access problem of IoT. *IEEE Internet Things Journal,* September 2020, vol. 7 (9), 8572-8589
- **V. RODOPLU ; M. NAKIP ; R. QORBANIAN ; D. T. ELIIYI.** Multi-channel joint forecasting-scheduling for the Internet of Things. *IEEE Access,* 2020, vol. 8, 217324-217354
- **N. SAHA ; S. BERA ; S. MISRA.** Sway: Traffic-aware QoS routing in software-defined IoT. *IEEE Transactions on Emerging Topics in Computing,* 2018, vol. 9 (1), 390-401
- **F. TANG ; Z. M. FADLULLAH ; B. MAO ; N. KATO.** An intelligent traffic load prediction-based adaptive channel assignment algorithm in SDN-IoT: A deep learning approach. *IEEE Internet of Things Journal,* 2018, vol. 5 (6), 5141-5154